# EUROPEAN PATENT APPLICATION

(11) **EP 1 795 068 A1**
(43) Date of publication of application: **13.06.2007**
(21) Application number: 05111759.6
(22) Date of filing: 06.12.2005
(51) Int. Cl.: A01J 5/08

(54) **Valved teatcup assembly**

(71) Applicant: Bou-Matic Technologies Corporation, Madison, WI 53716 (US)
(72) Inventor: Fernandez, Marcel, 37360 Sonzay (FR)
(74) Representative: von Rohr, Hans Wilhelm

(57) **Abstract**

A teatcup assembly (10) includes a shell (12) having a liner (14), and a valve (24) movably mounted in the shell for movement between a closed position during the off portion of the milking cycle, and an open position during the on portion of the milking cycle.

## Description

### BACKGROUND AND SUMMARY

The invention relates to a teatcup assembly for milking a mammal, and more particularly to a valved teatcup assembly.

Teatcup assemblies having a liner for receiving a teat are known in the prior art. A plurality of teatcups are connected to respective teats depending from the udder of a mammal. Each teatcup assembly has a shell with an inner liner or inflation around a respective teat and defining a milk flow passage within the liner below the teat, and a pulsation chamber outside the liner between the liner and the teatcup shell, all as is known in the prior art, for example U.S. Patent Nos. 4,269,143, 4,530,307, 5,178,095, 5,218,924, 6,039,001, 6,796,272, all incorporated herein by reference. The system has a milking cycle with an on portion and an off portion. Milk flows from the teat towards a milking claw during the on portion, and then to a storage vessel. During the off portion, the liner is collapsed around the teat, to massage the teat to aid in the circulation of body fluids. Vacuum is continuously applied to the milk flow passage within the liner. Vacuum is alternately and cyclically applied to the pulsation chamber between the liner and the teatcup shell, to open and close the liner, all as is known.

The present invention arose during continuing development efforts directed toward teatcup assemblies.

### BRIEF DESCRIPTION OF THE DRAWINGS

Fig. 1 is a perspective view of a teatcup assembly in accordance with the invention.

Fig. 2 is a sectional view taken along line 2-2 of Fig. 1.

Fig. 3 is like Fig. 2 and shows a different operational condition.

Fig. 4 is like Fig. 2 and shows a further operational condition.

Fig. 5 is a sectional view taken along line 5-5 of Fig. 2.

### DETAILED DESCRIPTION

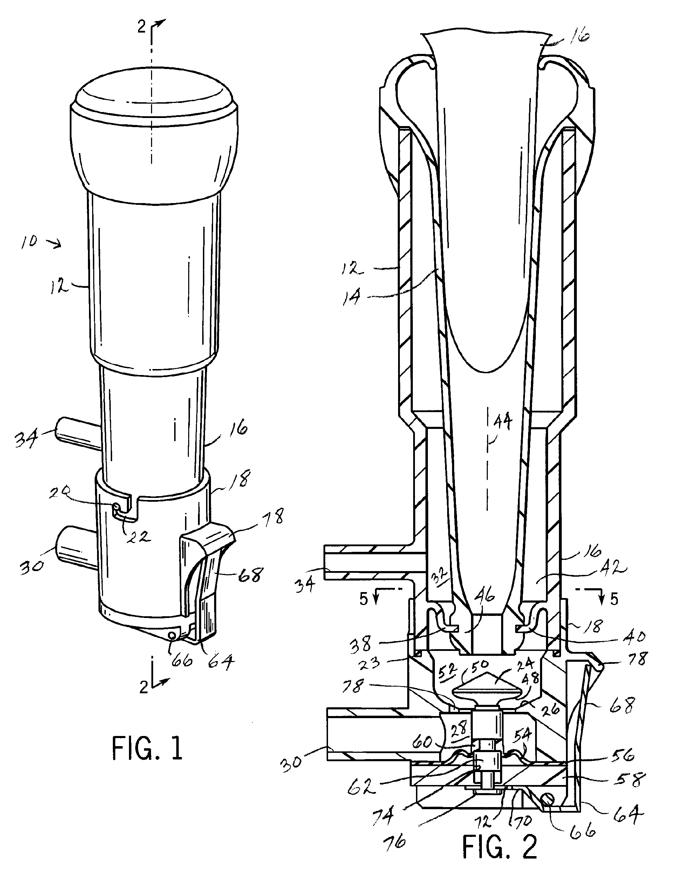

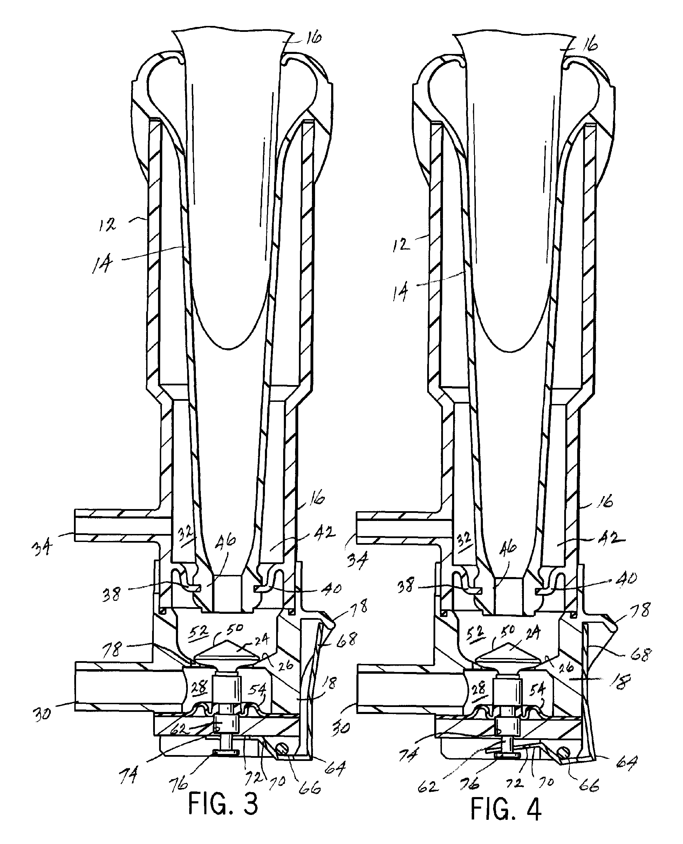

Figs. 1, 2 show a teatcup assembly 10 including a shell 12 having a liner 14 for receiving a teat 16 of a mammal to be milked. The shell includes an upper part 16 inserted axially downwardly into a lower part 18 and then turned to lock tab 20 in place in slot 22, and if desired in sealed relation by means of O-ring 23. A valve 24 is movably mounted in the shell for movement between a closed position, Fig. 3, engaging a valve seat 26, and an open position, Fig. 2, disengaging the valve seat. A vacuum chamber 28 is provided in the shell below valve seat 26 and has a vacuum port 30 for applying vacuum thereto. A pulsation chamber 32 is provided in the shell between shell 12 and liner 14 and above valve seat 26 and has a pulsation port 34 for applying pulsation vacuum in a milking cycle having an off portion blocking milk flow, and having an on portion permitting milk flow. As is known, vacuum is continuously applied to port 30, and vacuum is alternately and cyclically applied to port 34 to alternately collapse and open liner 14 around teat 16, providing the noted on and off portions of the milking cycle, and providing massage of the teat during the off portion to aid in circulation of body fluids.

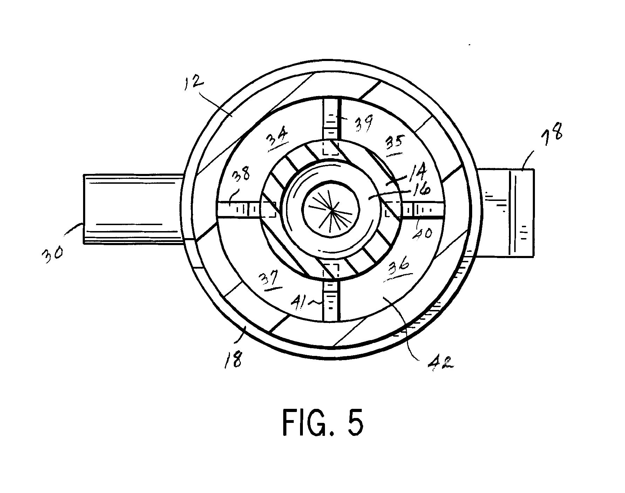

Valve 24 is in the closed position, Fig. 3, during the noted off portion of the milking cycle. Valve 24 is in the open position, Fig. 2, during the noted on portion of the milking cycle. The valve is actuated between the closed and open positions by pressure differential across the valve. The pressure differential is the difference in pressure between vacuum chamber 28 and pulsation chamber 32. The pressure in pulsation chamber 32, including negative pressure during on milking cycle portions, is communicated to the valve through gaps such as 34, 35, 36, 37, Fig. 5, between radial spokes such as 38, 39, 40, 41 extending across annular space 42 providing the noted pulsation chamber 32. Shell 12 and liner 14 extend axially along an axis 44, Fig. 2, and have annular space 42 therebetween providing pulsation chamber 32. Liner 14 has a lower end 46 held in place in the shell by the noted plurality of spokes 38-41 extending radially across annular space 42. The spokes are circumferentially spaced by arcuate gaps 34-37, respectively, therebetween. Pulsation chamber 32 thus communicates with valve 24 through gaps 34-37.

Valve 24 has a first surface 48 exposed to vacuum chamber 28 and responsive to pressure therein including negative pressure providing the noted continuous vacuum at port 30. Valve 24 has a second surface 50 exposed to pulsation chamber 32 through gaps 34-37 and responsive to pressure in the pulsation chamber including negative pressure and atmospheric or higher pressure and including pulsation thereof providing the noted pulsation vacuum supplied through port 34. An intermediate chamber 52 is provided in the shell above vacuum chamber 28 and below pulsation chamber 32. Intermediate chamber 52 is in selective communication with vacuum chamber 28, namely through valve seat 26 when valve 24 is in the open position, Fig. 2. Intermediate chamber 52 is in continuous communication with pulsation chamber 32 through gaps 34-37.

A biasing member 54, Fig. 2, biases valve 24 to the open position. The valve is actuated to the closed position, Fig. 3, in response to pressure differential thereacross between pulsation chamber 32 and vacuum chamber 28 overcoming the bias of biasing member 54, namely the pressure in pulsation chamber 32 being sufficiently greater than the pressure in vacuum chamber 28 during the noted off portion of the milking cycle to overcome the bias of biasing member 54 and actuate valve 24 to the closed position. In the preferred embodiment, the biasing member is a membrane diaphragm having an outer periphery 56 sealed to the teatcup shell between lower part 18 and a lower wall 58, and having an inner periphery 60 sealed to the valve at valve stem 62 and biasing the valve to a normally upward biased position.

A lever 64 is pivotally mounted to the shell at a pivot 66 and has a first arm 68 extending from the pivot for engagement by a dairyman for manually pivoting the lever, and has a second arm 70 extending from the pivot and engaging the valve at valve stem 62 to move the valve to the closed position, Fig. 4, upon pivoting of the lever in a first pivot direction to a first pivoted position, e.g. pivoting the lever counterclockwise in Fig. 4 by pushing lever arm 68 leftwardly toward the shell. Lever 64 is pivotable in a second pivot direction to a second pivoted position, e.g. clockwise in Fig. 3, with lever arm 68 in its rightward position. The noted second pivot direction is opposite to the noted first pivot direction. Arm 70 engages the valve at valve stem 62 in lost motion connection, e.g. by a slot or aperture such as 72 through which the valve stem extends, such that in the noted second pivoted position of the lever, Fig. 3, valve 24 may move between its closed and open positions in response to pressure differential thereacross. The shell has the noted lower wall 58 with an axially upwardly extending guide bore 74 therethrough. The valve has the noted axially downwardly extending stem 62 extending through and slidingly engaging bore 74 in guided relation therewith and having a lower enlarged flange 76. Arm 70 of lever 64 engages valve stem 62 below lower wall 58 and above flange 76 in the noted lost motion connection. Upon the noted counterclockwise pivoting of lever 64 from the position shown in Fig. 3 to the position shown in Fig. 4, arm 70 at slot 72 slides downwardly along valve stem 62 and then engages flange 76 to move the valve downwardly to the closed position. The shell includes a shroud 78 above lever arm 68 and permitting left-right movement of the latter but restricting access thereto to minimize accidental or unintended actuation of lever arm 68.

Intermediate chamber 52 is below the lower end 46 of liner 14 and is in open communication with the interior of the liner. Pulsation chamber 32 communicates with the interior of the liner through gaps 34-37 and intermediate chamber 52. Intermediate chamber 52 is above vacuum chamber 28 and below pulsation chamber 32. Intermediate chamber 52 is in selective communication with vacuum chamber 28, namely through valve seat 26 when valve 24 is in the open position, Fig. 2. Intermediate chamber 52 is in continuous communication with pulsation chamber 32, namely through gaps 34-37. An atmospheric vent 78 is provided through valve seat 26 between intermediate chamber 52 and vacuum chamber 28 to provide calibrated air leak into the latter. During the off portion of the milking cycle, the liner is collapsed and closed around the teat. During the on portion of the milking cycle, the liner is open. As the liner opens during the transition from the off portion to the on portion of the milking cycle, the opening movement of the liner causes a reduction in pressure within the liner, and the milk remaining in the liner from the previous cycle may suck backwards or be forced upwardly into the reduced pressure area around the teat end, which backwash of milk is undesirable. The noted air vent solves this problem by admitting a calibrated amount of air to enable the milk to be rapidly carried away from the teat end, and prevent the liner from acting like a suction pump, for which further reference may be had to U.S. Patent 6,055,931, incorporated herein by reference.

In a manual detach mode, the dairyman operator pushes lever arm 68 inwardly toward the shell, i.e. leftwardly in Figs. 1-4, to move valve 24 downwardly to its closed position, Fig. 4, whereafter the valve stays closed after detachment, due to atmospheric pressure above the valve and the continuous vacuum below the valve at port 30. In the event of a kick-off by the mammal, the atmospheric pressure above the valve creates a pressure differential across the valve due to the continuous vacuum therebelow at port 30, whereby the valve automatically moves to its closed position, Fig. 3, such that milk residues are kept in the milk line exiting from port 30. After detachment and during the washing mode, the valve is automatically opened and closed by the pressure variations generated during the washing cycle for cleaning.

It is recognized that various equivalents, alternatives and modifications are possible within the scope of the appended claims.

## Claims

1. A teatcup assembly comprising a shell having a liner for receiving a teat, a valve movably mounted in said shell for movement between a closed position engaging a valve seat, and an open position disengaging said valve seat, a vacuum chamber in said shell below said valve seat and having a vacuum port for applying vacuum thereto, a pulsation chamber in said shell between said shell and said liner and above said valve seat and having a pulsation port for applying pulsation vacuum in a milking cycle having an off portion blocking milk flow, and having an on portion permitting milk flow, said valve being in said closed position during said off portion of said milking cycle, said valve being in said open position during said on portion of said milking cycle.

2. The teatcup assembly according to claim 1 wherein said valve is actuated between said closed and open positions by pressure differential across said valve.

3. The teatcup assembly according to claim 2 wherein said pressure differential is the difference in pressure between said vacuum chamber and said pulsation chamber.

4. The teatcup assembly according to claim 3 wherein said valve has a first surface exposed to said vacuum chamber and responsive to pressure therein including negative pressure providing said vacuum, and wherein said valve has a second surface exposed to said pulsation chamber and responsive to pressure therein including negative pressure and atmospheric or higher pressure and including pulsation thereof providing said pulsation vacuum.

5. The teatcup assembly according to claim 4 comprising an intermediate chamber above said vacuum chamber and below said pulsation chamber, said intermediate chamber being in selective communication with said vacuum chamber, namely through said valve seat when said valve is in said open position, said intermediate chamber being in continuous communication with said pulsation chamber.

6. The teatcup assembly according to claim 5 comprising a biasing member biasing said valve to said open position, and wherein said valve is actuated to said closed position in response to pressure differential thereacross between said pulsation chamber and said vacuum chamber overcoming the bias of said biasing member, namely the pressure in said pulsation chamber being sufficiently greater than the pressure in said vacuum chamber during said off portion of said milking cycle to overcome the bias of said biasing member and actuate said valve to said closed position.

7. The teatcup assembly according to claim 6 comprising a lever pivotally mounted to said shell at a pivot, and having a first arm extending from said pivot for engagement by a dairyman for manually pivoting said lever, and having a second arm extending from said pivot and engaging said valve to move said valve to said closed position upon pivoting of said lever in a first pivot direction to a first pivoted position.

8. The teatcup assembly according to claim 7 wherein said lever is pivotable in a second pivot direction to a second pivoted position, said second pivot direction being opposite to said first pivot direction, said second arm engaging said valve in lost motion connection such that in said second pivoted position of said lever, said valve may move between said closed and open positions in response to said pressure differential thereacross.

9. The teatcup assembly according to claim 8 wherein said shell has a lower wall with an axially upwardly extending guide bore therethrough, said valve has an axially downwardly extending stem extending through and slidingly engaging said bore in guided relation therewith, and said second arm engages said stem below said lower wall in said lost motion connection.

10. The teatcup assembly according to claim 7 wherein said shell has a shroud permitting movement of said first arm and said pivoting of said lever but restricting access to said first arm to minimize accidental and unintended actuation thereof

11. The teatcup assembly according to claim 5 comprising an atmospheric vent through said valve seat between said intermediate chamber and said vacuum chamber and providing calibrated air leak into the latter.

12. The teatcup assembly according to claim 6 wherein said biasing member is a membrane diaphragm.

13. The teatcup assembly according to claim 1 wherein said shell and said liner extend axially along an axis and have an annular space therebetween providing said pulsation chamber, said liner has a lower end held in place in said shell by a plurality of spokes extending radially across said annular space, said spokes are circumferentially spaced by gaps therebetween, and said pulsation chamber communicates with said valve through said gaps.

14. The teatcup assembly according to claim 13 wherein said shell has an intermediate chamber below said lower end of said liner and in open communication with the interior of said liner, and wherein said pulsation chamber communicates with the interior of said liner through said gaps and said intermediate chamber.

15. The teatcup assembly according to claim 14 wherein said intermediate chamber is above said vacuum chamber and below said pulsation chamber, said intermediate chamber is in selective communication with said vacuum chamber, namely through said valve seat when said valve is in said open position, and said intermediate chamber is in continuous communication with said pulsation chamber.
